# EUROPEAN PATENT SPECIFICATION

(11) **EP 2 754 976 B1**
(45) Date of publication and mention of the grant of the patent: **04.10.2017**
(21) Application number: 14150515.6
(22) Date of filing: 08.01.2014
(51) Int. Cl.: F28D 20/00, F24H 1/52, F24H 8/00, F24D 3/08, F24D 12/02

(54) **External heat exchanger**
Externer Wärmetauscher
Echangeur de chaleur externe

(30) Priority: 10.01.2013 NL 2010109
(43) Date of publication of application: 16.07.2014
(73) Proprietor: Hans Hoenselaar V.o.F., 6582 DA Heumen (NL)
(72) Inventor: Hoenselaar, Johannes Wilhelmus Gerardus Maria, 6582 DA Heumen (NL)
(74) Representative: 't Jong, Bastiaan Jacob

(56) References cited:
- EP-A2- 0 825 388
- DE-A1- 19 620 373
- DE-U1- 29 518 845
- DE-U1-202005 018 362
- FR-A1- 2 419 486
- US-A- 4 408 567

## Description

The invention relates to improving the efficiency of heating systems for heating water.

A known external heat exchanger comprises a housing with an air inlet opening in the top surface. The air inlet opening is ring shaped. A circular exhaust output opening is positioned in a concentric position within the air inlet opening. In a bottom surface and opposite to the exhaust output opening, there is an exhaust input opening. Around the exhaust input opening, there is an air output opening that is placed in a concentric way around the exhaust input opening. Air from the air inlet opening is guided through the housing to the air output opening. Exhaust fumes from the exhaust input opening are guide through an inner housing to the exhaust output opening. Inside the inner housing there is a spiralling conduit for carrying fresh water. The spiralling conduit has a fresh water input and a preheated water output.

The external heat exchanger is placed on top of an existing gas combi boiler which is part of the heating system of a house or building. The external heat exchanger is placed to improve the efficiency of the heating system. The combi boiler comprises an exhaust opening and concentrically around the exhaust opening is an air input opening. The exhaust from the combi boiler is connected to the exhaust input from the external heat exchanger and the air inlet of the combi boiler is connected to the air output opening of the external heat exchanger.

The combi boiler comprises a heating water output, a return heating water input, a hot water output and a fresh water input. The fresh water input of the spiralling conduit of the external heat exchanger is connected to a fresh water supply. The preheated water output is connected to the fresh water input of the combi boiler.

When the combi boiler produces exhaust flue gasses warmer than the water in the spiralling conduit, the exhaust flue gasses heat the water in the spiralling conduit. This way, the water in the spiralling conduit is preheated before being fed into the combi boiler. This preheating takes place when warm exhaust flue gasses flow are generated because hot water is prepared, but also when the combi boiler is warming up heating water.

A problem with this external heat exchanger is that the legionellae flourish in preheated water, especially if the preheated water does not flow. The preheated water is warmed up without flowing when the combi boiler is warming up heating water. This is the reason that in many countries there is a maximum content of preheated tap water. For instance, in the Netherlands the maximum content is 3 liter. However, when the combi boiler is warming up heating water for a long time, the water in the spirally conduit may reach the same temperature as the exhaust flue gas flowing around the spiralling conduit. In that case, the external heater doesn't increase the efficiency of the heating system anymore.

The object of the invention is to reduce or solve this problem. A Combination for improving the efficiency of a heating system disclosing the features of the preamble of claim 1 is shown in document EP 0 825 388 A2. This object is reached by a Combination for improving the efficiency of a heating system with the features defined in claim 1. Because the heating water circuit is in a closed circuit, the risks of contamination with legionellae from heating water are low to non existent. Because the tank has an input opening and an output opening, the heating water can flow through the tank and the tank can form a part of the closed heating water circuit. As part of the closed heating water circuit, for which legionella risks are low to non existent, such legionella risks do no impose limits to the size of the tank. Therefore the size of the tank can be chosen to maximise the efficiency of the heating system.

In case the heating water in the tank is colder than the exhaust gasses, the heating water in the tank is warmed up by the exhaust gasses from the heater. Therefore heat present in the exhaust gasses from the heater is put to use instead of flowing out and the efficiency of the heating system is increased with respect to not having an external heat exchanger.

Because the external heat exchanger is external and does not require modifications on the heater, the installation is straightforward and therefore cheap. Moreover because not modifications on the heater are required, it is not required to have the heater retested by official approval agents. The external heat exchanger comprises a valve arranged to direct heating water from a return conduit of the closed heating water circuit to the external heat exchanger in case the heating water in the return conduit is colder than the heating water from the external heat exchanger and arranged to direct heating water from the return conduit to bypass the external heat exchanger if the heating water in the return conduit is warmer than the heating water from the external heat exchanger.

By selecting the conditions under which return heating water is guided through the external heat exchanger, the heater receives return heating water with the highest temperature. When receiving return heating water with the highest temperature, the heater has to produce the least amount of heat to heat the heating water to a desired temperature.

In an embodiment of the invention, the external heat exchanger comprises an exhaust output channel downstream of the tank and a one way shutter in the exhaust output channel arranged to open for venting exhaust flue gasses.

Because the exhaust out put channel comprises a one way shutter downstream of the tank, gasses cannot enter the external heat exchanger in the direction of the heater. If the heater does not produce exhaust gasses, gasses from the exhaust output channel can enter the external heat exchanger. As such gasses are not exhaust gasses from the heater, they could cool the water in the tank. Because the one way shutter is in the exhaust output channel and downstream of the tank, the gasses cannot reach the tank and heating water in the tank will not cool down by heating gas from the exhaust output channel.

In an embodiment of the invention wherein the external heat exchanger comprises an exhaust inlet for receiving the exhaust gasses connected to an inlet chamber, the tank comprising a plurality of parallel pipes of heat conducting material each with an input opening in the inlet chamber and arranged for guiding the exhaust gasses through the tank to an outlet chamber, wherein the exterior surfaces of the pipes are arranged to be in contact with the heating water.

Because the exhaust inlet is connected to an inlet chamber, a plurality of pipes can be fed with exhaust gasses. Because a plurality of pipes can be fed with exhaust gasses and fed through the tank while in contact with the heating water, there is a large surface in which contact is made with the heating water. Therefore there it is possible to transport a large amount of heat from the exhaust gasses to the heating water.

In an embodiment of the invention, the external heat exchanger is arranged to be used with the inlet chamber above the outlet chamber.

Because the inlet chamber is above the outlet chamber, the exhaust gasses flow downward through the pipes. As the exhaust gasses cool down by exchanging heat with the pipes and thus the heating water, condensation water and condensate may from on pipes. As the condensation water flows down by gravitation, it flows in the same direction as the exhaust gasses. This is advantageous, because on the downstream side of the pipes, the exhaust gasses are cooler than upstream and can therefore contain less water. Therefore this contributes to additional condensation. Condensation releases heat, so this contributes to the efficiency of the external heat exchanger. In the reverse case, downstream side exhaust gasses could vaporize condensation water. When condensation vaporizes, this costs heat and is detrimental to the efficiency.

In an embodiment of the invention, the external heat exchanger comprises a condensation water drain for continuously draining condensation water from the exhaust gasses.

By comprising a condensation water drain for continuously draining condensation water, the heat exchanger can be used without maintenance for removing formed condensation water.

In an embodiment of the invention, the external heat exchanger comprises a circular exhaust inlet with a centre line which in use is parallel to the force of gravity.

With the centre line parallel to the force of gravity, the exhaust inlet is in a horizontal plane. Because the exhaust inlet is in a horizontal plane and is circular, there is freedom to place the external heat exchanger at a height comparable to the height of the heater. With the heater in different positions, the exhaust gasses from the heater will arrive from different directions at the external heat exchanger. As the exhaust inlet is circular, a circular end part of a pipe guiding the exhaust gasses can be used without the angle being a limitation for the placement of the external heat exchanger relative to the heater. This end part of the pipe can be horizontal, so that no space is required for the external heat exchanger above the heater. In fact it gives so much freedom that the external heat exchanger can be mounted (for instance on a wall) with the exhaust output channel to the left or to the right of the pipe.

In an embodiment of the invention, the external heat exchanger comprises a further tank placed around the tank, the further tank arranged to receive tap water and to output tap water to a heater input after flowing along a heat conducting part of the outer surface of the tank.

Most heaters are only capable of either delivering hot tap water or heating water at any moment, but not at the same time. As soon as hot tap water is delivered, the circulation of heating water through the heater stops. The advantage of this embodiment is that whatever the mode of operation, preheated water (preheated tap water or preheated heating water) can be fed to the heater, so that whatever the mode of operation, the efficiency is increased.

An additional advantage is that when hot tap water is produced, always heat will be transferred from the exhaust gasses via the further tank. This is because preheated tap water will flow out of the further tank so that colder tap water will flow into the further tank and the colder tap water can absorb heat. Being able to put heat from exhaust gasses to use during hot tap water operation is especially advantageous, because during tap water operation, heaters are the least efficient.

In case the heating water in the tank is not as warm as the exhaust gasses during hot tap water operation, this heating water will also be heated.

In a further embodiment of the invention, the external heat exchanger comprises a further tank placed around the tank for guiding tap water, the further tank comprising a heat conducting wall arranged to exchange heat between the exhaust gasses downstream of the means for exchanging heat from exhaust gasses from a heater to heating water in the tank and the tap water.

By exchanging heat between the tap water and the exhaust gasses downstream of where heat is exchanged between the exhaust gasses and the heating water, the efficiency of the heating system is further improved without impeding on the efficiency gain by preheating the heating water.

In the invention, there is provided an combination for improving the efficiency of a heating system, the heating system comprising a heater arranged for heating up heating water in a closed heating water circuit, the combination comprising an external heat exchanger and a buffer, wherein the buffer is arranged to receive heating water from the output opening of the tank and arranged to supply heating water to a return input for heating water of the heater in case the heating water in the return conduit is colder than the heating water in the buffer.

By using a buffer of heating water between the external heat exchanger and the return input, additional capacity for storing heat from the exhaust gasses is added above the capacity as formed by the heating water in the tank. This additional capacity can be used to preheat heating water with heat that would have gone lost in case the maximum capacity of the external heat exchanger would be used. This allows to increase the efficiency further with space consumption where space is available.

In an embodiment according to the invention, the combination comprises a shunt pipe between the buffer and the input opening of the tank comprising a one way valve arranged to block heat water flow in the direction of the buffer and the buffer is arranged above the external heat exchanger.

Because of the presence of the shunt pipe, heat from the external heat exchanger can be transported to the buffer in case no heating water is pumped from the return into the external heat exchanger. Because the buffer is arranged above the external heat exchanger and because of the presence of the shunt pipe, even an additional pump is not necessary because warmer water from the external heat exchanger can flow to the buffer by buoyancy. The one way valve prevents that water is pumped into the buffer from the return without passing through the external heat exchanger, which would not contribute to increasing efficiency.

Embodiments of the invention will now be described, by way of example only, with reference to the accompanying schematic drawings. Corresponding reference symbols in the schematic drawings indicate corresponding parts.
Figure 1 shows a cross section of an external heat exchanger according to the invention
Figure 2 shows a cross section of an external heat exchanger according to the invention in another direction.
Figure 3 shows a schematic overview of the connections with heating water and tap water according to a use of the invention.
Figure 4 shows a detail cross section of an exhaust output channel comprising a one way shutter.

### Embodiments

Heaters for heating water are known in several forms such as combination heaters or boilers and can be gas fired or can use diesel, oil or other fuels. Hereafter they will all be understood to be heaters.

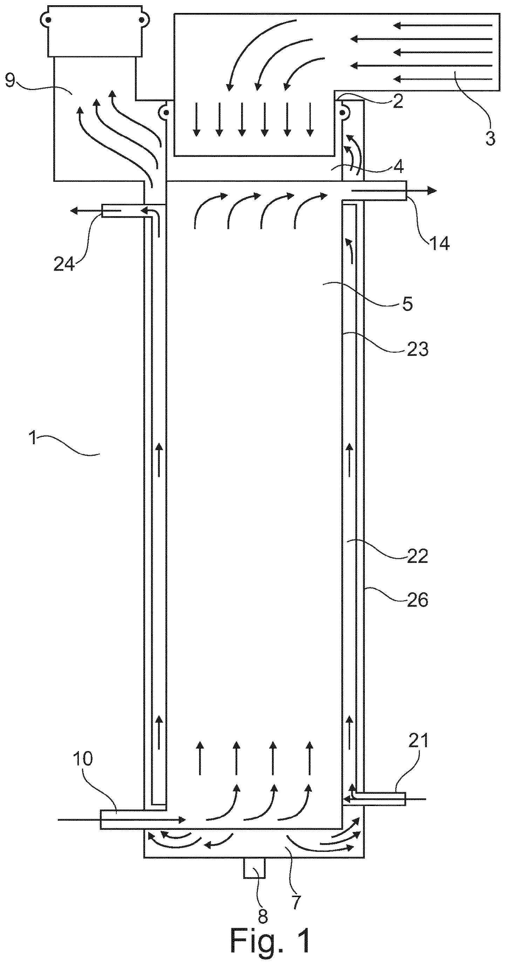

An embodiment of an external heat exchanger according to the invention is shown in figure 1, which shows a cross section of the external heat exchanger. In the embodiment an external heat exchanger (1) comprises an exhaust inlet (2). The exhaust inlet is circular and provides access to an exhaust pipe (3) connected to a gas fired combination heater (11) positioned on the right side of the external heat exchanger (1). The exhaust inlet (2) is in use vertical, i.e. the centre line of the circular exhaust inlet is parallel to the force of gravity. The exhaust inlet (2) ends in the top surface of the external heat exchanger (1). The exhaust pipe (3) has a bend to fit into the exhaust inlet (2). In the exhaust inlet (2) there is a recess to accommodate an 0-ring for providing a tight fit and leakage free connection between the exhaust inlet (2) interior and the exhaust pipe (3).

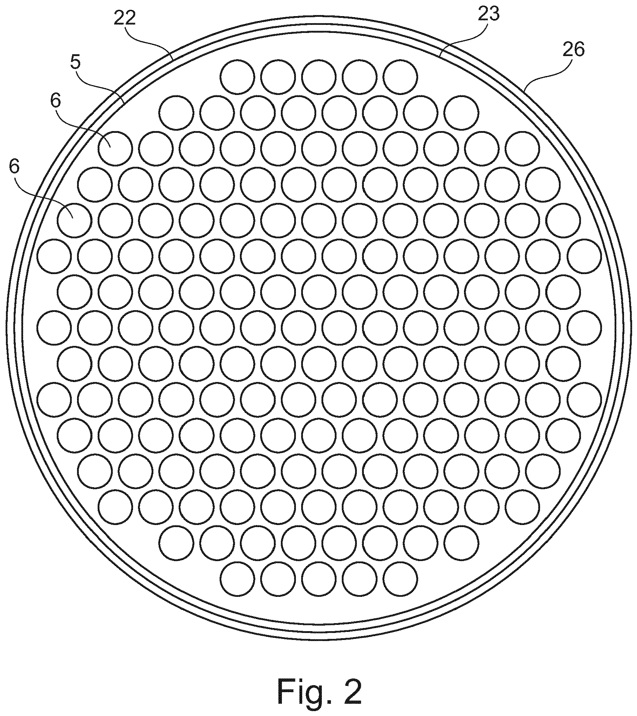

Extending down from the exhaust inlet (2) is a cylindrical space comprising an inlet chamber (4) and a tank (5). The tank (5) comprises a plurality of 166 internal pipes (6) of 8 mm inner diameter and 1 mm wall thickness. See figure 2 for a cross section of the tank (5) and internal pipes (6) in a direction perpendicular to the cross section of figure 1. (The number of pipes in the figure may be a different number). The internal pipes (6) are suspended from the wall of the tank (5) facing the inlet chamber (4). The wall comprises holes corresponding to the internal pipes (6) to allow exhaust gasses to flow from the inlet chamber (4) into the internal pipes (6). The internal pipes (6) are parallel and lead to an outlet chamber (7). The outlet chamber (7) comprises a drain (8) for condensation water and condensate. A wall of the tank facing the outlet chamber (7) further fixes the position of the internal pipes (6). The wall facing the outlet chamber (7) comprises holes corresponding to the position of the pipes so that the exhaust gasses can flow from the internal pipes (6) through the holes into the outlet chamber (7).

From the outlet chamber (7) the exhaust gasses flow towards an exhaust output channel (9) where it leaves the external heat exchanger (1).

Although warm gasses such as exhaust gasses tend to move against the direction of gravity by buoyancy, draft in the exhaust output channel (9) can still transport the exhaust gasses out of the external heat exchanger (1). Apart from that, modern gas fired combination heaters have an auxiliary ventilator for driving out exhaust gasses and in case the external heat exchanger (1) is connected through the external heat exchanger and out of the exhaust output channel (9). Therefore, no additional ventilator is needed when the external heat exchanger is added to an existing gas fired combination heater with heating circuit.

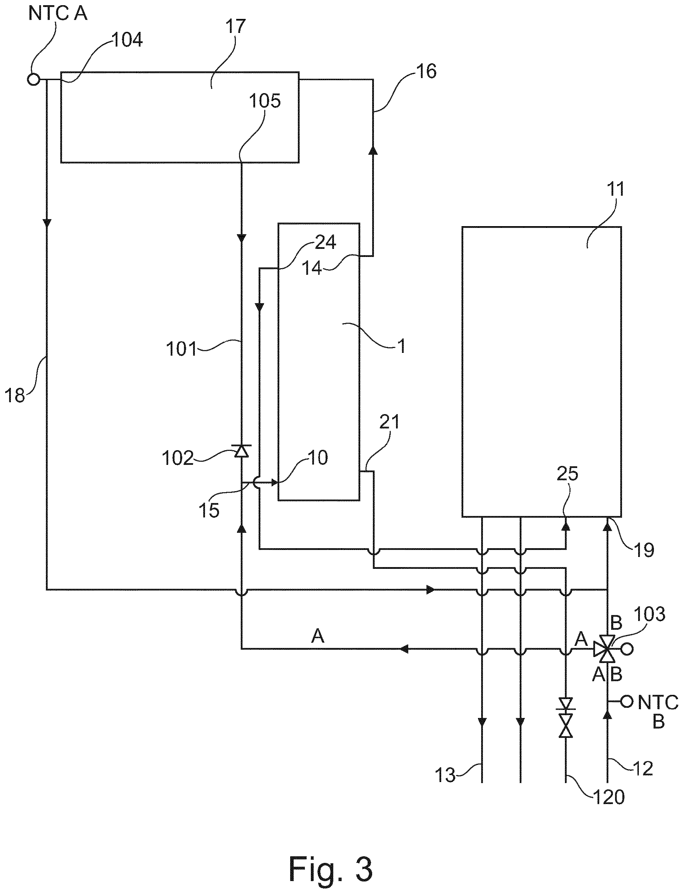

Figure 3 schematically shows how the external heat exchanger (1) is connected in an example of use. The gas fired combination heater (11) is connected to a closed heating water system with a first return pipe (12) with relatively cool heating water from radiators and a supply (13) with relatively warm heating water coming from the gas fired combination heater.

The tank comprises an tank input opening (10), which is in use connected to a tank input pipe (15). This tank input pipe (15) is in turn connected via a diversion pipe (A) and a three-way valve (103) to a first return pipe (12) of the closed heating water system. Between the internal pipes (6) and the inner wall of the tank (5) the heating water can flow towards an output opening (14). In use the heating water flows out of the output opening (14) in the direction of the return inlet (19) of the gas fired combination heater (11). The internal pipes (6) are made of heat conducting material so that there can be a heat exchange between exhaust gasses flowing though the internal pipes (6) and the heating water in the tank (5). In this case the internal pipes (6) are made from RVS. The tank can hold around 7 liters of heating water.

Between the first return pipe (12) and the tank input opening (10) there is a three-way valve (103). The status of the three-way valve (103) is controlled based upon heating water temperatures measured by a first NTC element (NTC A) and a second NTC element (NTC B).

The output opening (14) of the external heat exchanger (1) is connected via a tank output pipe (16) to an external buffer tank (17). The external buffer tank (17) has a first buffer output opening (104) connected to a first buffer output pipe (18) leading to a second return pipe (B). The temperature in the first buffer output pipe (18) is measured by the first element (NTC A). The second return pipe (B) is connected to a return opening (19) of the gas fired combination heater. The second return pipe (B) is also connected to the three-way valve (103). Furthermore, the external buffer tank (17) has a second buffer output opening (105) connected to a shunt pipe (101).

The three-way valve (103) and the first NTC element (NTC A) and the second NTC element (NTC B) are arranged such that the return water flows to the external heat exchanger (1) in case the return heating water is colder than the heating water in the external buffer (17). From the external heat exchanger (1) the heating water flows to the external buffer (17) and from the buffer it flows via the first buffer output pipe (18) to the second return pipe (B) and on to the return opening (19) of the gas fired combination heater (1). This flow takes place because a pump in the gas fired combination heater (1) pumps water into the supply (13) by applying pressure. By pumping water into the supply (13), heating water downstream is pumped around as well. In this case, the heating water does not flow through the shunt pipe (101) because of a one-way shutter (102) in the shunt pipe arranged to block flow of water in the direction of the external buffer (17).

When the temperature as measured by the first NTC element (NTC A) is lower than the temperature as measured by the second NTC element (NTC B), the return heating water does not flow through the diversion pipe (A), but through the second return pipe (B) towards the return opening (19) of the gas fired combination heater (1). This also takes place because of the pump in the gas fired combination heater (1) pumping out heating water in the supply (13). As no heating water is pumped into the diversion pipe (A) towards the external heat exchanger (1), no heating water is pumped back from the external buffer (17) via the first buffer output pipe (18). Simultaneously with heating water flowing from the first return pipe (12) to the return opening (19) of the gas fired combination heater (1), an amount of heating water from the external heat exchanger (1) may circulate to the external buffer (17) when it is warmer than the heating water in the external buffer (17) by simple buoyancy. When this takes place, an equal amount of heating water will flow from the external buffer (17) via the shunt pipe (101) and the one-way shutter (102) back to the tank input pipe (15) and the tank input opening (10). As this flow is caused by buoyancy, no pumping is necessary.

The external heat exchanger (1) also comprises a secondary channel for tap water. Fresh water to be heated flows from a fresh water supply (120) into the secondary channel via a tap water opening (21). From there it flows into a further tank (22) placed around the tank (5). Flowing through the further tank (22) the tap water is in contact with an outer surface of the tank (5) which is made of heat conducting material, in this case RVS. Because the tank (5) is made of heat conducting material, the tank can transfer heat to the tap water.

The tap water opening (21) is in use on the lower side of the external heat exchanger (1). The further tank (22) is made of heat conducting material, in this case RVS. The tap water flows out of the further tank (22) via a tap water outlet opening (24) to a tap water inlet (25) of the gas fired combination heater (11). The tank exchanges heat between the heating water and the tap water in a counter flow principle via the conducting material of the tank.

The tap water outlet opening (24) is in use on the top side of the external heat exchanger (1). This way the exhaust gasses which has passed the internal pipes (6) to heat the heating water, enter the outlet chamber (7) and then flow along the wall of the further tank (22) to heat up the tap water. The wall of the further tank (22) is arranged to conduct heat. In this case the wall is of RVS.

The external heat exchanger (1) also comprises a housing (26) that further encloses the exhaust gasses while flowing from the outlet chamber (7) to the exhaust output channel (9).

While flowing from the outlet chamber (7) to the exhaust output channel (9) flows along the further tank (22) to transfer remaining heat to the tap water in the further tank (22) via the RVS conducting wall of the further tank.

The housing is of a plastic that does not conduct heat. This is to allow a maximum of heat to be maintained within the exhaust gasses to be exchanged with the tap water.

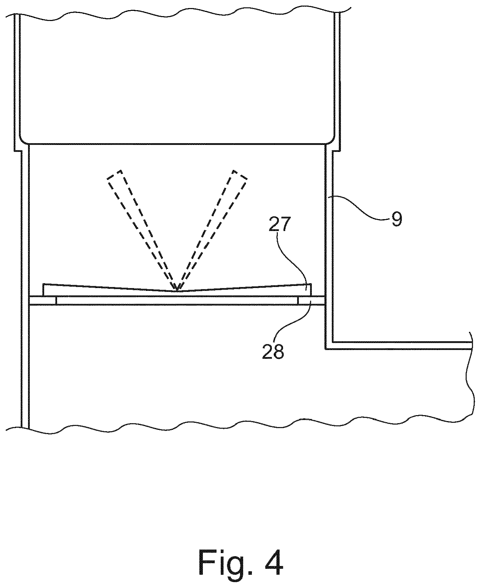

In the exhaust output channel (9) there is a one way shutter (27). The shutter (27) comprises two valves that open under pressure of exhaust gasses to the position of the dashed lines in figure 4. When the pressure of the exhaust gasses on both sides of the shutter (27) is equal the shutter rests on a flange (28) in the exhaust output channel (9). The flange (28) also ensures that the valves only open one way, so that cooler gasses cannot enter the external heat exchanger (1) spaces where there are surfaces of conducting material arranged to exchange heat with either the tap water or the heating water.

The descriptions above are intended to be illustrative, not limiting. For example, all conducting material in the examples are RVS, but could for instance be aluminium or copper. Also the number of internal pipes (6) could be different and the shape of the pipes may not be cylindrical. Also the tank and the further tank may not be cylindrical. Also the direction of the internal pipes (6) may not be vertical. Further more, whereas the heat exchange from the exhaust gasses to the heating water is of the counter flow principle this may also be the parallel flow principle. Similarly the flow principle of heat exchange between the tank tap water and the exhaust gasses may change as well as the flow principle between the heating water and the tap water.

Furthermore, the temperature of the heating water may be measured by other devices than NTC-elements. Also NTC-A may be placed in the buffer (17) for instance close to the first buffer output opening (104). Although the invention may be operated without an additional pump as explained in the example, an additional pump may be installed for instance to enhance the flow from the external heat exchanger (1) to the external buffer (17) caused by buoyancy. In stead of a gas fired combination heater, the exhaust gasses of a single heating water heater could be used to warm up heating water in the external heat exchanger (1). In that case, the exhaustion gasses of the single heating water heater could also be used to preheat tap water before it is finally heated up by another heater. Alternatively, the external heat exchanger (1) does not comprise the means for heating up tap water, only heating water.

## Claims

1. Combination (1, 17) for improving the efficiency of a heating system, the heating system (11, 12, 13) comprising a heater (11) arranged for heating up heating water in a closed heating water circuit (12,13), the combination comprising an external heat exchanger (1) comprising:
- a tank (5) connected to the closed heating water circuit and comprising an input opening (10) for receiving heating water and an output opening (14) for the heating water; and
- means (6) for exchanging heat from exhaust gasses from the heater to heating water in the tank
**characterized in that** the external heat exchanger (1) comprises a valve (103) arranged to direct heating water from a return conduit (12) of the closed heating water circuit to the external heat exchanger in case the heating water in the return conduit is colder than the heating water from the external heat exchanger and arranged to direct heating water from the return conduit to bypass the external heat exchanger if the heating water in the return conduit is warmer than the heating water from the external heat exchanger
wherein the combination further comprises a buffer (17), wherein the buffer is arranged to receive heating water from the output opening (14) of the tank (5) and arranged to supply heating water to a return input (19) for heating water of the heater in case the heating water in the return conduit is colder than the heating water in the buffer.

2. Combination (1,17) according to claim 1, wherein the external heat exchanger (1) comprises an exhaust output channel (9) downstream of the tank and a one way shutter (27) in the exhaust output channel arranged to open for venting exhaust flue gasses.

3. Combination (1,17) according to claim 1 or 2, wherein the external heat exchanger (1) comprises an exhaust inlet (2) for receiving the exhaust gasses connected to an inlet chamber (4), the tank comprising a plurality of parallel internal pipes (6) of heat conducting material each with an input opening in the inlet chamber and arranged for guiding the exhaust gasses through the tank to an outlet chamber (7), wherein the exterior surfaces of the pipes are arranged to be in contact with the heating water.

4. Combination (1,17) according to claim 3 wherein the external heat exchanger (1) is arranged to be used with the inlet chamber (4) above the outlet chamber (7).

5. Combination (1,17) according to any of the preceding claims, wherein the external heat exchanger (1) comprises a condensation water drain (8) for continuously draining condensation water from the exhaust gasses.

6. Combination (1,17) according to any of the preceding claims, wherein the external heat exchanger (1) comprises a circular exhaust inlet (2) with a centre line which in use is parallel to the force of gravity.

7. Combination (1,17) according to any of the preceding claims, wherein the external heat exchanger (1) comprises a further tank (22) placed around the tank (5), the further tank arranged to receive tap water and to output tap water to a heater input (25) after flowing along a heat conducting part of the outer surface of the tank.

8. Combination (1,17) according to any of the preceding claims, wherein the external heat exchanger (1) comprises a further tank (22) placed around the tank for guiding tap water, the further tank comprising a heat conducting wall arranged to exchange heat between the exhaust gasses downstream of the means (6) for exchanging heat from exhaust gasses from a heater to heating water in the tank (5) and the tap water.

9. Combination according to any of the preceding claims, comprising a shunt pipe (101) between the buffer (17) and the input opening (10) of the tank comprising a one way valve arranged to block heat water flow in the direction of the buffer (10) and the buffer is arranged above the external heat exchanger.

## Patentansprüche

1. Kombination (1, 17) zur Verbesserung der Effizienz eines Heizsystems, wobei das Heizsystem (11, 12, 13) ein Heizgerät (11) umfasst, das zum Erwärmen von Heizwasser in einem geschlossenen Heizwasserkreis (12, 13) ausgelegt ist, wobei die Kombination einen externen Wärmetauscher (1) umfasst, der Folgendes umfasst:
- einen Tank (5), der mit dem geschlossenen Heizwasserkreis verbunden ist und eine Eingangsöffnung (10) zum Empfangen von Heizwasser und eine Ausgangsöffnung (14) für das Heizwasser umfasst; und
- Mittel (6) zum Austausch von Wärme von Abgasen aus dem Heizgerät zu Heizwasser in dem Tank,
**dadurch gekennzeichnet, dass**
der externe Wärmetauscher (1) ein Ventil (103) umfasst, das dafür ausgelegt ist, für den Fall, dass das Heizwasser in der Rückführleitung kälter als das Heizwasser von dem externen Wärmetauscher ist, Heizwasser von einer Rückführleitung (12) des geschlossenen Heizwasserkreises zu dem externen Wärmetauscher zu leiten, und dafür ausgelegt ist, Heizwasser von der Rückführleitung so zu leiten, dass es den externen Wärmetauscher umgeht, wenn das Heizwasser in der Rückführleitung wärmer als das Heizwasser von dem externen Wärmetauscher ist, wobei die Kombination ferner einen Puffer (17) umfasst, wobei der Puffer dafür ausgelegt ist, Heizwasser von der Ausgangsöffnung (14) des Tanks (5) zu empfangen, und dafür ausgelegt ist, für den Fall, dass das Heizwasser in der Rückführleitung kälter als das Heizwasser in dem Puffer ist, Heizwasser einer Rücklauföffnung (19) zur Erwärmung von Wasser des Heizgeräts zuzuführen.

2. Kombination (1, 17) nach Anspruch 1, wobei der externe Wärmetauscher (1) einen stromabwärts des Tanks befindlichen Abgasausgangskanal (9) und eine Einwegklappe (27) in dem Abgasausgangskanal, die dafür ausgelegt ist, sich zum Ablassen der Rauchabgase zu öffnen.

3. Kombination (1, 17) nach Anspruch 1 oder 2, wobei der externe Wärmetauscher (1) einen Abgaseinlass (2) zum Empfangen der Abgase umfasst, der mit einer Einlasskammer (4) verbunden ist, wobei der Tank eine Vielzahl von parallelen inneren Rohren (6) aus wärmeleitendem Material umfasst, die jeweils eine Eingangsöffnung in der Einlasskammer aufweisen und zum Führen der Abgase durch den Tank zu einer Auslasskammer (7) ausgelegt sind, wobei die Außenoberflächen der Rohre so angeordnet sind, dass sie in Kontakt mit dem Heizwasser stehen.

4. Kombination (1, 17) nach Anspruch 3, wobei der externe Wärmetauscher (1) dafür ausgelegt ist, mit der Einlasskammer (4) über der Auslasskammer (7) verwendet zu werden.

5. Kombination (1, 17) nach einem der vorhergehenden Ansprüche, wobei der externe Wärmetauscher (1) einen Kondenswasserauslauf (8) zum kontinuierlichen Ablassen von Kondenswasser von den Abgasen umfasst.

6. Kombination (1, 17) nach einem der vorhergehenden Ansprüche, wobei der externe Wärmetauscher (1) einen kreisförmigen Abgaseinlass (2) mit einer Mittellinie, die bei der Verwendung parallel zur Schwerkraft ist, umfasst.

7. Kombination (1, 17) nach einem der vorhergehenden Ansprüche, wobei der externe Wärmetauscher (1) einen weiteren Tank (22) umfasst, der um den Tank (5) herum angeordnet ist, wobei der weitere Tank dafür ausgelegt ist, Leitungswasser zu empfangen und Leitungswasser an einen Heizgeräteeingang (25) auszugeben, nachdem dieses entlang eines Wärmeleitungsteils der Außenoberfläche des Tanks geflossen sind.

8. Kombination (1, 17) nach einem der vorhergehenden Ansprüche, wobei der externe Wärmetauscher (1) einen weiteren Tank (22) umfasst, der um den Tank zum Führen von Leitungswasser herum angeordnet ist, wobei der weitere Tank eine Wärmeleitungswand umfasst, die dafür ausgelegt ist, Wärme zwischen den Abgasen stromabwärts der Mittel (6) zum Austausch von Wärme von Abgasen aus einem Heizgerät an Heizwasser in dem Tank (5) und an das Leitungswasser abzugeben.

9. Kombination nach einem der vorhergehenden Ansprüche, die ein Überbrückungsrohr (101) zwischen dem Puffer (17) und der Eingangsöffnung (10) des Tanks umfasst, das ein Einwegventil umfasst, um einen Heizwasserfluss in der Richtung des Puffers (10) zu blockieren, und wobei der Puffer über dem externen Wärmetauscher angeordnet ist.

## Revendications

1. Combinaison (1, 17) pour améliorer l'efficacité d'un système de chauffage, le système de chauffage (11, 12, 13) comprenant un dispositif de chauffage (11) agencé pour chauffer de l'eau de chauffage dans un circuit d'eau de chauffage fermé (12, 13), la combinaison comprenant un échangeur de chaleur externe (1) comprenant :
- un réservoir (5) raccordé au circuit d'eau de chauffage fermé et comprenant une ouverture d'entrée (10) pour recevoir de l'eau de chauffage et une ouverture de sortie (14) pour l'eau de chauffage ; et
- des moyens (6) pour échanger de la chaleur entre les gaz d'échappement venant du dispositif de chauffage et l'eau de chauffage dans le réservoir,
**caractérisée en ce que** l'échangeur de chaleur externe (1) comprend une soupape (103) agencée pour diriger de l'eau de chauffage d'un conduit de retour (12) du circuit d'eau de chauffage fermé à l'échangeur de chaleur externe dans le cas où l'eau de chauffage du conduit de retour est plus froide que l'eau de chauffage venant de l'échangeur de chaleur externe et agencée pour diriger de l'eau de chauffage du conduit de retour afin de dériver l'échangeur de chaleur externe si l'eau de chauffage du conduit de retour est plus chaude que l'eau de chauffage de l'échangeur de chaleur externe,
dans laquelle la combinaison comprend en outre un tampon (17), dans laquelle le tampon est agencé pour recevoir de l'eau de chauffage de l'ouverture de sortie (14) du réservoir (15) et agencé pour fournir de l'eau de chauffage à une entrée de retour (19) pour chauffer l'eau du dispositif de chauffage dans le cas où l'eau de chauffage du conduit de retour est plus froide que l'eau de chauffage du tampon.

2. Combinaison (1, 17) selon la revendication 1, dans laquelle l'échangeur de chaleur externe (1) comprend un canal de sortie d'échappement (9) en aval du réservoir et un obturateur à voie unique (27) dans le canal de sortie d'échappement agencé pour s'ouvrir pour évacuer les gaz de fumées d'échappement.

3. Combinaison (1, 17) selon la revendication 1 ou 2, dans laquelle l'échangeur de chaleur externe (1) comprend une entrée d'échappement (2) pour recevoir les gaz d'échappement raccordée à une chambre d'entrée (4), le réservoir comprenant une pluralité de tuyaux internes parallèles (6) de matériau thermoconducteur, chacun avec une ouverture d'entrée dans la chambre d'entrée et agencés pour guider les gaz d'échappement à travers le réservoir vers une chambre de sortie (7), dans laquelle les surfaces externes des tuyaux sont agencées pour être en contact avec l'eau de chauffage.

4. Combinaison (1, 17) selon la revendication 3, dans laquelle l'échangeur de chaleur externe (1) est agencé pour être utilisé avec la chambre d'entrée (4) au-dessus de la chambre de sortie (7).

5. Combinaison (1, 17) selon l'une quelconque des revendications précédentes, dans laquelle l'échangeur de chaleur externe (1) comprend un drain d'eau de condensation (8) pour drainer en continu l'eau de condensation des gaz d'échappement.

6. Combinaison (1, 17) selon l'une quelconque des revendications précédentes, dans laquelle l'échangeur de chaleur externe (1) comprend une entrée d'échappement circulaire (2) avec une ligne centrale qui, en service, est parallèle à la force de la pesanteur.

7. Combinaison (1, 17) selon l'une quelconque des revendications précédentes, dans laquelle l'échangeur de chaleur externe (1) comprend un autre réservoir (22) placé autour du réservoir (5), l'autre réservoir étant agencé pour recevoir de l'eau du robinet et pour délivrer de l'eau du robinet à une entrée (25) du dispositif de chauffage après écoulement le long d'une partie thermoconductrice de la surface externe du réservoir.

8. Combinaison (1, 17) selon l'une quelconque des revendications précédentes, dans laquelle l'échangeur de chaleur externe (1) comprend un autre réservoir (22) placé autour du réservoir pour guider l'eau du robinet, l'autre réservoir comprenant une paroi thermoconductrice agencée pour échanger de la chaleur entre les gaz d'échappement en aval des moyens (6) pour échanger de la chaleur venant des gaz d'échappement d'un dispositif de chauffage avec l'eau de chauffage du réservoir (5) et l'eau du robinet.

9. Combinaison selon l'une quelconque des revendications précédentes, comprenant un tuyau de shuntage (101) entre le tampon (17) et l'ouverture d'entrée (10) du réservoir, comprenant une soupape à voie unique agencée pour bloquer l'écoulement d'eau de chauffage dans la direction du tampon (10) et le tampon est agencé au-dessus de l'échangeur de chaleur externe.
